(19) **Europäisches Patentamt European Patent Office Office européen des brevets**

(11) **EP 3 199 976 B1**

(12) **EUROPEAN PATENT SPECIFICATION**

(45) Date of publication and mention of the grant of the patent:
**20.04.2022 Bulletin 2022/16**

(21) Application number: **16153265.0**

(22) Date of filing: **29.01.2016**

(51) International Patent Classification (IPC):
**G01S 7/03** *(2006.01)*     **G01S 13/931** *(2020.01)*
**H01Q 1/32** *(2006.01)*     **H01Q 21/06** *(2006.01)*

(52) Cooperative Patent Classification (CPC):
**G01S 13/931; G01S 7/03; H01Q 1/3233; H01Q 21/065**

(54) **PLANAR RADAR ANTENNA FOR AUTOMOTIVE MULTI-MODE AND MULTI-TARGET DETECTION**

**PLANARE RADARANTENNE ZUR MEHRMODUS- UND MEHRZIELERKENNUNG EINES FAHRZEUGS**

**ANTENNE RADAR PLANE POUR DÉTECTION MULTICIBLE ET MULTIMODE AUTOMOBILE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.08.2017 Bulletin 2017/31**

(73) Proprietor: **DENSO CORPORATION**
**Kariya-city,**
**Aichi-pref. 448-8661 (JP)**

(72) Inventors:
 • **ALENLJUNG, Klas**
 **417 55 göteborg (SE)**

 • **ABE, Yoshihiro**
 **417 55 Göteborg (SE)**
 • **PERNSTÅL, Thomas**
 **417 55 Göteborg (SE)**

(74) Representative: **Ernicke, Klaus Stefan et al**
**ERNICKE Patent- und Rechtsanwälte PartmbB**
**Beim Glaspalast 1**
**86153 Augsburg (DE)**

(56) References cited:
**WO-A1-2011/106881     WO-A1-2013/053467**
**US-A1- 2015 042 507     US-A1- 2015 194 728**

**Description**

The invention concerns a planar radar antenna for automotive appliances, i.e. for being used on a vehicle and supporting various driver assistance systems like autonomous emergency breaking, automatic cruise control, lane changing assist, lane-keeping assist, pedestrian detection, and so on. It is preferentially embodied as a radar patch antenna with an array of receiving antenna elements (antenna array arrangement) formed by physical antenna element structures, in particular subsets of electrically connected conductive patches on the surface of a substrate.

WO 2013/053 467 A1 discloses an automotive planar radar antenna with several short-range receiving antenna elements, which can be arranged in a symmetric pattern and with a non-linear distribution of the short-range receiving antenna elements in a direction in parallel to the symmetry axis in both halves, but with two groups of antenna strands, each having a linear distribution of the short-range receiving antennas in the overall arrangement.

US 2015/0042507 A1 discloses an arrangement of a block with short range receiving antenna elements next to a block with middle or long range receiving antenna elements.

Planar radar antennae known in the state of art have been optimized for various purposes, in particular either for long-range radar detection or short-range radar detection and either for detection of targets and their resolution with respect to the azimuth angle or with respect to the elevation angle.

The prior known antennae cannot provide optimal detection properties for all kinds of traffic situations which may occur and which may be relevant for recognition.

The objective for the present invention is to provide an improved planar radar antenna which allows for multi-target detection and in particular avoids directional blindness or directional loss of multi-target recognition ability. This objective is solved by a planar radar antenna with the features of the independent claim.

A planar radar antenna according to the present disclosure comprises an antenna array arrangement with a plurality of antenna element structures, which are arranged on the surface of a substrate. The antenna array arrangement comprises multiple neighboring receiving antenna elements, each of them formed by an antenna element structure, in particular a subset of multiple electrically connected patches. Each receiving antenna element has a phase center indicating the effective center of a radar sensitivity lobe of this antenna element.

The receiving antenna elements within the antenna array arrangement are arranged in an axially symmetric pattern. The symmetry axis will usually be arranged in the mounting situation in an essentially vertical direction. With other words the planar radar antenna according to the present disclosure is designed for being mounted in such a way that the two halves of the antenna array arrangement are arranged on the left side and right side of a (vertical) symmetry axis and thus defining a right half and a left half of a recognition space, in which the various radar sensitivity lobes extend. This recognition space may in particular be the space in front of a vehicle, on which the planar radar antenna is mounted.

The symmetry of the antenna array arrangement both simplifies calibration and detection, as for every signal of a single receiving antenna element in the left half a conjugate signal will be available from a corresponding receiving antenna element in the right half. The corresponding conjugate signals can be used on the one hand for simplified and thus quickened evaluation and on the other hand for plausibility checks.

In each half of the antenna array arrangement at least three receiving antenna elements are arranged, wherein the antenna element structure, in particular a patch subset, of each receiving antenna element extends at least in a longitudinal direction essentially parallel to the symmetry axis. With other words the planar radar antenna comprises at least six receiving antenna elements.

The extension of an antenna element structure, in particular a patch subset, or respectively a receiving antenna element in the longitudinal direction corresponds in the above mentioned mounting situation to an extension of the receiving antenna element in the vertical direction. By this extension the radar sensitivity lobe of the respective receiving antenna element will at least be directionally restricted to a defined angle range in the elevation dimension (height angle from frontal horizontal line upwards/downwards), i.e. to sense reflected radar signals from objects in a limited angular range extending above and below the horizontal line. In general, the sensitivity lobe is restricted to an angular range above or below the normal direction, which is defined as the direction perpendicular to the surface of the planar radar antenna.

The phase centers of the receiving antenna elements are arranged in each half in such a way that no more than two phase centers are situated on a straight connecting line, which connects any two of the phase centers.

With other words the arrangement of more than two phase centers is non-linear. According to a preferred embodiment, all phase centers in each half are nonlinearly arranged according to above arrangement rule. Linear arrangement of three or more phase centers on the planar radar antenna on a common connecting line would lead to blind spot directions, i.e. the phenomenon that multi-target recognition is deteriorated if several targets are arranged in this specific direction in front of the planar radar antenna.

With prior known planar antennas having such linear arrangement of phase centers, less or no multiple targets can be discerned if they are situated on a line perpendicular to the direction of linear arrangement (blind spot direction). When two or more targets become situated in such a blind spot direction, the targets cannot be discerned anymore and the detection result becomes inaccurate or ambiguous.

The non-linear arrangement of the more than two phase centers according to the present disclosure improves the disambiguation ability and thus helps to avoid loss or confusion of objects in multi-target tracking. With other words, blind spot directions are avoided. As a result, the safety properties of driver assistance systems can be improved, in particular for pedestrian recognition and pedestrian protection purposes.

The minimum of three receiving antenna elements in each half preferentially consists of antenna elements having a maximum lateral aperture width which is equal to or smaller than half of the radar wave length (small lateral aperture width). This comparatively small lateral extension of those receiving antenna elements results in broadness of the sensitivity lobe in the lateral direction, i.e. in the horizontal direction / azimuth angle dimension in the above defined mounting situation. With other words: a receiving antenna element with small lateral aperture width is sensitive to impinging signals from a segment with broad azimuth angle. Those receiving antenna elements with small lateral aperture width are preferentially used for short range detection and will afterwards also be called "short-range receiving antenna elements". In particular multiple receiving antenna elements with such small lateral aperture are preferentially placed side-by-side in the center of the antenna array arrangement with a lateral spacing offset of equal to or less than half of the radar wavelength, in particular with uniform lateral spacing offsets. Those at least three receiving antenna elements with small lateral aperture width in both halves may form together a short-range detection core.

Within the antenna array arrangement according to the present disclosure at least one additional receiving antenna element for long-range detection may be provided. It may preferentially have a large lateral aperture width. It may be provided next to the short-range receiving antenna elements and in particular on the outer lateral end (away from the symmetry axis), i.e. outside of the short-range detection core. In particular, at least one additional receiving antenna element for long range detection / with large lateral aperture width is preferentially provided in each half next to the antenna elements with small lateral aperture width.

A receiving antenna element for long range detection / with large lateral aperture width preferentially has a lateral aperture width which is significantly broader than the lateral aperture width of a short-range receiving antenna element. In particular this large lateral aperture width may be equal to or larger than the radar wave length. It may amount to more than two times the value of the radar wavelength. This broadened lateral aperture width results in a limitation of the radar sensitivity lobe to a narrowed angular range in the azimuth dimension. A receiving antenna element with large lateral aperture width is thus well suited and preferentially used for long-range detection and will be called afterwards "long-range receiving antenna element".

However, also a receiving antenna element with small lateral aperture width may be used for long range detection. It may be placed outside of the short-range detection core (in lateral direction next to the at least three receiving antenna elements with small lateral aperture width) and distanced to those by a larger lateral spacing offset, in particular a lateral spacing offset which is equal to or larger than the radar wavelength or larger than 1.25 times the radar wavelength. The increased lateral spacing offset results in increased accuracy for long-range detection.

The arrangement of one or more long-range receiving antenna elements next to the short-range receiving antenna elements also increases the recognition capacities of the planar radar antenna and its resolution. The long-range receiving antenna elements (i.e. receiving antenna elements with large lateral aperture width and/or increased lateral spacing offset) can be co-used for short-range detection, in particular for increasing the number of targets which can be identified in parallel. This is particularly helpful for pedestrian detection.

With the minimum of six short-range receiving antenna elements (with small lateral aperture width) and two long-range receiving antenna elements (preferentially with large lateral aperture width), which are arranged in a non-linear symmetric pattern as described above, up to seven targets having the same range (radial distance) and range rate (radial velocity) can be identified and tracked in parallel.

Furthermore, arrangement of additional conductive patches in the lateral direction essentially perpendicular to the symmetry axis on the outer lateral end next to the short-range receiving antenna elements reduces the influence of so called edge refraction interference to the measured signals of the short-range antenna elements. Those additional conductive patches may be patches of the antenna element structure forming the long-range radar antenna elements and/or separate patches.

Transmitted or received radar signals have a tendency to propagate on the surface of the substrate and to be refracted on its edges. In particular incoming radar signals or signal parts reflected at the radom (cover of the antenna) may be refracted on the edges in the lateral direction next to the receiving antenna elements and cause propagating surface waves. These refracted signals interfere with the radar signals which are directly impinging on the receiving antenna elements. Short-range receiving antenna elements are more vulnerable to such interferences caused by edge refraction than long-range receiving antenna elements.

Additional conductive patches between the short-range receiving antenna elements and the lateral edges will cause an attenuation effect to the surface waves and thus help to reduce or even eliminate the vulnerability of the short-range receiving antenna elements to the edge refraction phenomenon. As a result, so called erroneous ghost-object recognition can be reduced or even avoided.

In the following description, the sub-claims and in the attached drawings further features and advantages of the present invention are indicated.

The invention is depicted in the drawings in an exemplary and schematic way. They show:

Figure 1:            a schematic depiction of a radar patch antenna in a first manifestation;

Figure 2:            a perspective illustration of directional sensitivity lobes which are created by the radar patch antenna of Figure 1;

Figure 3:            a second manifestation of a radar patch antenna;

Figure 4:            a magnified depiction of the non-linear arrangement of the phase centers in the right half of the radar patch antenna of Figure 3;

Figures 5A-5D:       Examples of subsets of patches for forming a radar antenna element;

Figure 6:            a perspective illustration according to Figure 2 for explaining angular definitions and directional alignment of targets on a projection line;

Figure 6A:           A sectional view on two neighboring phase centers and their lateral spacing offset;

Figure 7 and 8:      an illustration of the distribution of phase centers of the radar patch antenna according to Figure 3 and the resulting directional overall accuracy;

Figure 9 and 10:     Depictions according to Figures 7 and 9 for illustrating the directional ambiguity error;

Figure 11 and 12:    Depictions according to Figures 7 and 9 for illustrating the directional maximum number of unambiguously resolvable targets.

Some preferred embodiments of the present invention are illustrated in the Figures. In those examples, the planar radar antenna is designed as a radar patch antenna. The antenna array arrangement is thus embodied as a patch field (11) comprising various conductive patches (12). The patches are preferentially arranged on a common substrate (13). Various conductive patches (12) may be electrically connected to form a subset (14), in particular in the form of a patch column. Each single subset (14) or any group of subsets (14) may constitute an antenna element structure and thus may define a receiving antenna element (R1 - R5, R1' - R5').

The following description is to be understood in such a way that instead of a radar patch antenna (10), any other kind of planar radar antenna could be provided. The radar patch antenna constitutes a preferred embodiment as it can be manufactured at moderate costs and in a fully automated production process. Furthermore, other electric or electronic parts can be provided in or on the same substrate with the antenna array arrangement, for example on the opposite surface of the substrate. In the same kind, instead of a patch field, any other kind of antenna array arrangement can be provided and instead of a subset of patches, any other kind of antenna element structure may be used.

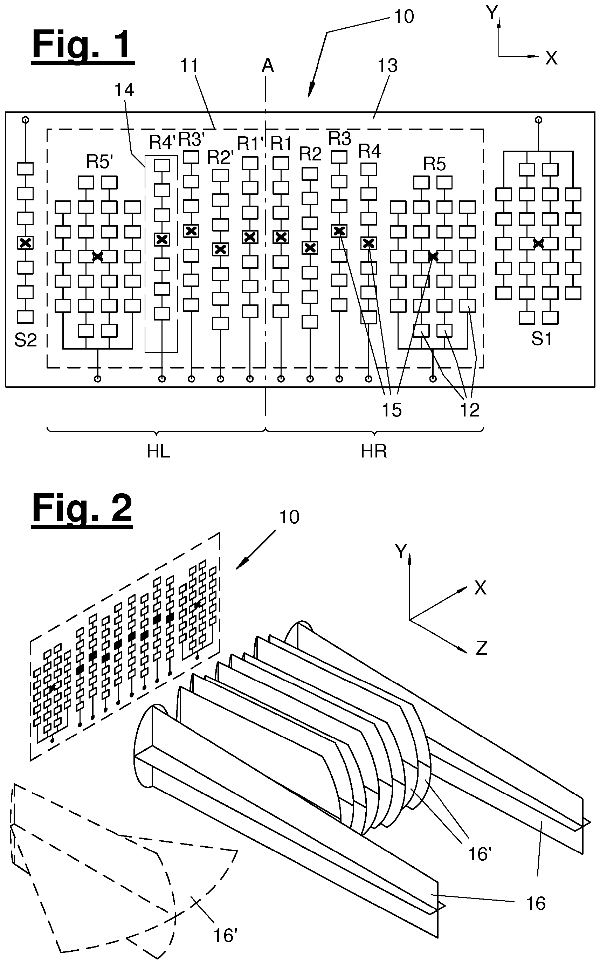

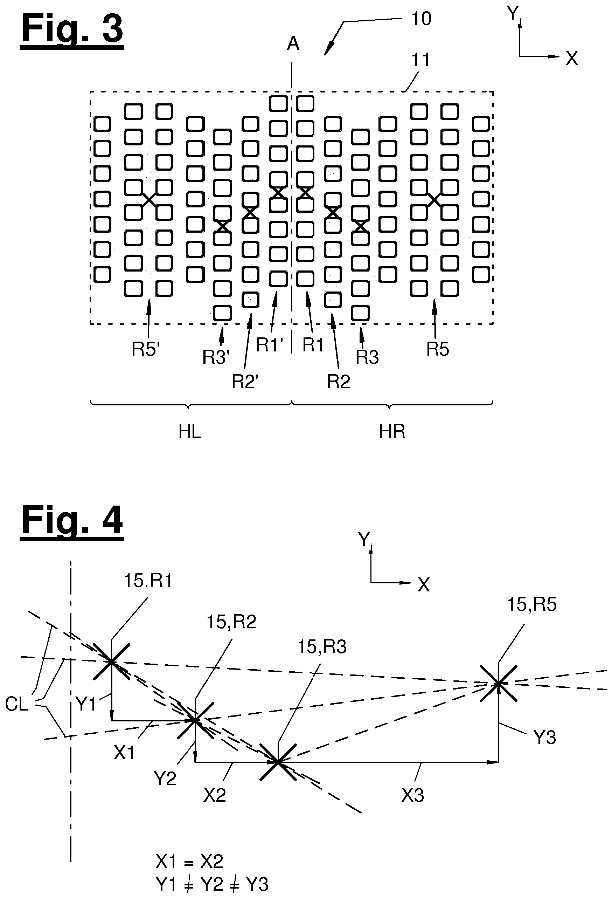

Two exemplary manifestations of the radar patch antenna (10) according to the present disclosure are depicted in Figures 1 and 3. Each of those radar patch antennas (10) comprises a patch field (11), which may also be called the receiving antenna field. This patch field is preferentially a coherent patch field without any other elements placed in-between the antenna elements. I.e. all the receiving antenna elements are contained in the one patch field and arranged side by side, so that no other elements or empty spots are interposed between the receiving antenna elements.

The antenna array arrangement / patch field (11) comprises a left half (HL) and a right half (HR). In the right half (HR) of Figure 1 four short-range receiving antenna elements (R1, R2, R3, R4) (i.e. receiving antenna elements with small lateral aperture width (dX)) and one receiving antenna element (R5) for long range detection are positioned. In the drawings, the receiving antenna element (R5) for long-range detection has a large lateral aperture width (dX) and it is distanced to the outermost short-range receiving antenna by an increased lateral spacing offset (X3) with respect to the lateral spacing offsets (X1, X2) among the short-range antenna elements (R1 - R4). However, the receiving antenna element for long-range detection (R5) could also be embodied by a receiving antenna element with small lateral aperture width.

Between the left half (HL) and the right half (HR) the symmetry axis (A) is arranged. According to the symmetric arrangement, the left half (HL) also comprises four short-range receiving antenna elements (R1', R2', R3', R4') and one long-range receiving antenna element (R5').

The short-range antenna elements (R1 - R4, R1' - R4') in the inner part of the planar radar antenna (10) or respectively the antenna array arrangement (11) constitute a short-range detection core. Within this short-range detection core preferentially all lateral spacing offsets among the short-range receiving antenna elements (R1 - R4, R1' - R4') are uniform, i.e. have the same value.

The planar radar antenna / radar patch antenna (10) according to the manifestation of Figure 3 comprises a similar arrangement of receiving antenna elements, with the difference that only three short-range receiving antenna elements (R1, R2, R3, R1', R2', R3') are placed in each of the halves (HR, HL). The short-range detection core in the inner part of the planar radar antenna (10) thus contains six short-range receiving antenna elements (R1 - R3, R1' - R3') with uniform lateral spacing offsets among them.

The planar radar antennae according to Figures 1 and 3 comprise each an even number of short-range receiving antenna elements. As an optional addition, a further receiving antenna element, in particular a further short-range receiving antenna element, may be arranged on the symmetry axis (A). Thus, the short-range detection core may comprise an odd number of receiving antenna elements. This additional short-range receiving antenna element (not depicted) is preferentially placed according to the same non-linear arrangement pattern, i.e. in such a way that it is not placed (situated) on any straight connecting line (CL, shown in Figure 4) through two phase centers (15) of the receiving antenna elements (R1, R2, R3, R4, R5) in any of the halves (HR, HL). With other words, the additional short-range receiving antenna element is placed outside of any straight connecting line (CL, shown in Figure 4) through two phase centers (15) of the receiving antenna elements (R1, R2, R3, R4, R5) in any of the halves (HR, HL).

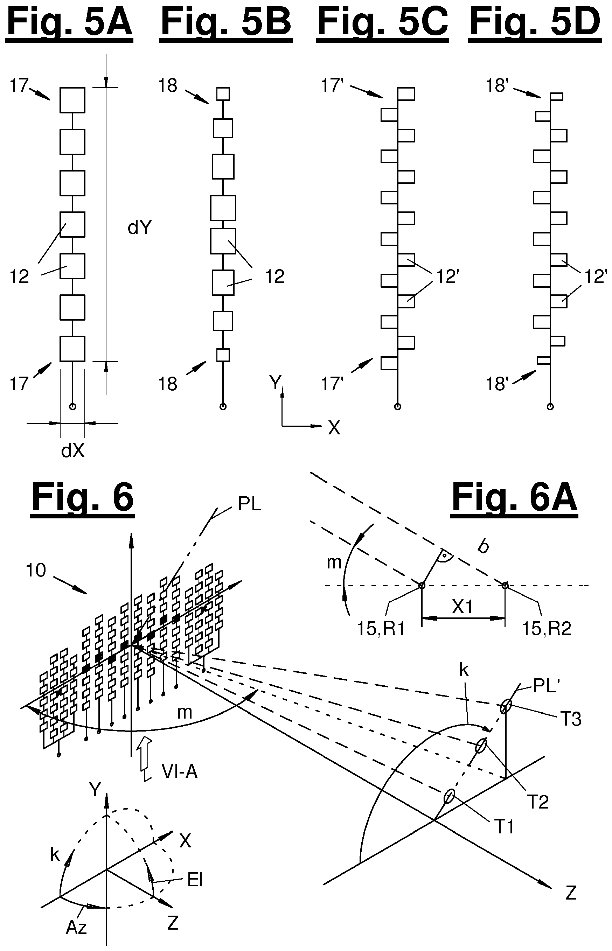

Each receiving antenna element may - according to a preferred manifestation - be formed by a subset of multiple electrically connected patches. Figure 1 and Figures 5A to 5D illustrate various kinds of such subsets (14) of patches (12, 12'), which may form a receiving antenna element. In the example of Figures 1 and 5A, each subset (14) for a short-range receiving antenna element is formed by a straight column of electrically connected patches (12), in particular square patches. The patches (12) are exclusively arranged in the longitudinal direction (Y), i.e. in parallel to the symmetry axis (A), which will result in a narrow lateral aperture width (dX) / the small lateral aperture width (dX) mentioned above.

The longitudinal aperture width (dY) is defined by the length of the column of conductive patches (12). The lateral aperture width (dX) is defined by the single width of any of the patches (12) in the example of Figure 5A. All patches (12) within the column have the same shape and size. Thus the longitudinal ends of the column are regular ends (17).

Figure 5B shows an alternative arrangement of patches (12) to form a subset (14). This patch column is also formed by essentially square patches that are exclusively arranged in the longitudinal direction (Y) (straight column). However, here tapered longitudinal ends (18) of the column are provided, which are formed by patches (12) with reduced size and/or reduced longitudinal spacing. The maximum lateral aperture width (dX) is defined here by the broadest patches (12) in the middle of the patch column. The longitudinal aperture width (dY) is defined by the column length.

Figure 5C illustrates another alternative arrangement of patch fields (12') for forming a patch column. Here essentially rectangular patches (12') are arranged on both sides of an intermediate electric connecting line, but otherwise the arrangement is similar to the one of Figure 5A. Likewise, here all patches (12') have the same shape and size, which results in regular longitudinal ends (17') of the patch column.

Figure 5D shows yet another alternative patch arrangement, similar to Figure 5B. All patches (12') are arranged left and right sided to an intermediate electric connecting line. At the end of the column again patches (12') with reduced size and/or reduces spacing are arranged, which leads to tapered longitudinal ends (18').

The shape and the size of the subset (14) of patches (12) define the directional characteristic of a sensitivity lobe (16, 16') of the respective receiving antenna element (R1-R5, R1'-R5'). Tapered ends (18, 18') will approximate the overall surface of a patch subset (14) to an elliptic shape, which is beneficial to reduce the sidelobe level.

The broader the aperture width (dX, dY) of the subset (14) is selected the narrower the beam-width will be, wherein the width can be selected separately in the lateral direction (X) and the longitudinal direction (Y). A broad extension of the subset (14) in the longitudinal direction (Y) will lead to a thin extension of the sensitivity lobe in the longitudinal direction (Y), or respectively to a thin angular sensitivity range in the elevation direction.

When also the lateral aperture width (dX) is broad / large, as e.g. for the long-range receiving antenna elements (R5, R5') in Figures 1 and 3, the sensitivity lobe (16) will also have a thin characteristic in the lateral direction (X) and will thus cover a comparatively small angular range in the azimuth dimension.

Figure 2 exemplarily shows the sensitivity lobes (16') for the short-range receiving antenna elements (R1-R4, R1'-R4') and the sensitivity lobes (16) for the long-range receiving antenna elements (R5, R5').

A short-range sensitivity lobe (16') covers a rather thin angular range in the elevation dimension but a rather broad angular range in the azimuth dimension. An additional short-range sensitivity lobe (16') is shown in dashed lines in a non-hidden position next to the radar patch antenna (10) for illustration of the broad angular range in the azimuth dimension.

The long-range sensitivity lobes (16) cover both a thin angular range in elevation dimension and azimuth dimension.

The radar patch antenna (10) according to the present disclosure may comprise one, two or more separate sending antenna elements (S1, S2). The manifestation of a radar patch antenna (10) according to Figure 1 comprises two additional sending antenna elements (S1, S2) which are arranged on the same substrate (13) with the receiving antenna field (11). However, the sending antenna elements (S1, S2) may be arranged in any arbitrary way.

Alternatively or additionally to the sending antenna elements (S1, S2) of Figure 1, any of the receiving antenna elements (R1-R5, R1'-R5') may be co-used as a sending antenna element. An antenna that is used as both transmitter and receiver may preferentially act as transceiver and receiver simultaneously, for example by the use of a circulator.

The one or more sending antenna elements (S1, S2) may be placed according to the same non-linear arrangement pattern as the receiving antenna elements.

Figure 4 shows the arrangement of the phase centers (15) of the receiving antenna elements (R1, R2, R3, R5) in the right half (HR) of the radar patch antenna (10) according to Figure 3 in magnified depiction to explain the non-linear arrangement of phase centers (15) in more detail.

Every phase center (15, R1, R2, R3, R5) has a lateral spacing offset (X1, X2, X3) and a longitudinal spacing offset (Y1, Y2, Y3) from its neighboring phase center. The spacing offsets (X1-X3, Y1-Y3) define the lateral and longitudinal spacing of the short-range and long-range receiving antenna elements and they are chosen such that at maximum two phase centers (15) within one half (HR, HL) of the patch field (11) are placed on a straight connecting line (CL). The straight connecting line (CL) is a line linearly connecting any two of the phase centers (15) in a half (HL, HR). All possible straight connecting lines (CL) between any two phase centers (15) in the right half (HR) are exemplarily shown in Figure 4 by dotted lines. The phase centers (15) are shown as cross-markings.

Preferentially, in every half (HR, HL) at least one positive longitudinal spacing offset (Y3) and one negative longitudinal spacing offset (Y1, Y2) are provided between neighboring receiving antenna elements (The negative longitudinal spacing offset is directed opposite to the positive longitudinal spacing offset). With other words, a series of phase centers (15) of the receiving antenna elements (R1-R5, R1'-R5') of the radar patch antenna (10) is preferentially arranged in a W-shape or respectively in an up- and down-pattern. By this, an overall small longitudinal width of the patch field (11) can be maintained, which is beneficial considering the very narrow mounting space available for an automotive radar antenna.

The lateral spacing offsets (X1, X2) between neighboring short-range receiving antenna elements (R1, R2, R3) (in the short-range detection core, i.e. among the at least three receiving antenna elements with small lateral aperture width) may be chosen in any arbitrary way. However, it is preferred that all lateral spacing offsets (X1, X2) between neighboring short-range receiving antennas (R1, R2, R3) (in the short-range detection core) are uniform, i.e. have the same lateral offset value. This will simplify the calculational effort for evaluating the azimuth position of any identified target.

The amount of the lateral spacing offset (X1, X2) between neighboring short-range receiving antenna elements (R1, R2, R3) may be equal to or shorter than half of the radar wavelength. If this constraint is met, a maximum number of targets can be detected in the horizontal direction / lateral direction without any ambiguities for the maximum field of view in azimuth direction (0 degree to 180 degrees), as any phase difference between impinging radar signals from the same target on neighboring receiving antenna elements can unambiguously be attributed to the azimuth position of the reflection center (Bragg-criterion, see explanations below). The lambda-half condition makes sure that there is only one direction with constructive interference in the visible space. If a restricted field of view segment in the azimuth direction is sufficient, the minimum lateral spacing offset among the short-range receiving antenna elements may be larger than half of the radar wavelength.

The lateral spacing offset (X3) between a short-range receiving antenna element (R3/R4) (the outermost short-range receiving antenna element in the short-range detection core) and a neighboring receiving antenna (R5) for long-range detection may be larger than half of the radar wavelength. This lateral spacing offset (X3) is preferentially equal to or larger than the radar wavelength, in particular larger than 1.25 times the radar wavelength.

The lateral spacing offset (X3) for the receiving antenna element for long-range detection is preferentially irregular to the lateral spacing offsets (X1, X2) among the short-range receiving antenna elements. Irregular means that the lateral spacing offset (X3) between the outermost short-range receiving antenna element (R3) and the long-range receiving antenna element (R5) is non-uniform to and no integer multiple of the (preferentially uniform) lateral spacing offset (X1, X2) among the short-range receiving antenna elements (R1, R2, R3). It may be a non-integer multiple like for example 2.5 times the value of the lateral spacing offset (X1, X2) among the short-range receiving antenna elements (R1, R2, R3). For even finer resolution the factor may be increased. By such non-integer factor the sensitivity characteristic of the planar radar antenna is improved as non-trivial ambiguities close to the bore-sight direction are suppressed.

When the lateral offsets (X1, X2) between all short-range receiving antenna elements (R1 - R4, R1' - R4') are uniform, the intended non-linear arrangement can still be created by selecting non-uniform amounts and preferentially changing or alternating signs for the longitudinal spacing offsets (Y1, Y2, Y3) between neighboring receiving antenna elements, as defined above.

Furthermore, at least one longitudinal spacing offset (Y1, Y2, Y3) between any receiving antenna elements may have a length, which is chosen equal to or smaller than half of the radar wavelength (Bragg criterion, see explanations below). In such case, unambiguous detection of the elevation position is possible for the maximum field of view in the elevation direction (0 degree to 180 degrees). If a restricted field of view segment in the elevation direction is sufficient, the minimum longitudinal spacing offset among any two receiving antenna elements may be larger than half of the radar wavelength.

Figure 6 shows a perspective view on the radar patch antenna (10) similar to the depiction of Figure 2. The lateral direction (X) and the longitudinal direction (Y) and the thereto perpendicular normal direction (Z) are illustrated for the mounting situation of the radar patch antenna (10) on the front of a vehicle. With other words the lateral direction (X) and the normal direction (Z) define an essentially horizontal plane. The longitudinal direction (Y) and the normal direction (Z) define the essentially vertical symmetry plane.

The elevation angle (El) is defined as a rotation around the lateral direction (X). The azimuth angle (Az) is defined as a rotation around the longitudinal direction (Y) / vertical direction.

The prior design of radar patch-antennas usually focused on these two angular dimensions of Azimuth (Az) and Elevation (El) only. For the present disclosure, also a roll angle (k) is relevant, which is presently defined as a rotation around the normal direction (Z).

For detection of multiple targets (T1, T2, T3) with a radar patch antenna (10) various partially contradicting requirements should be met. A maximum detection range both in elevation (El) and azimuth (Az) dimension is to be achieved. Within this detection range, also a maximum number of targets (T1, T2, T3) should be individually detectable for any possible arrangement of such targets. The position and the relative radial speed should further be determined unambiguously for each target (T1, T2, T3) in parallel, in particular based on the waveform (modulation scheme).

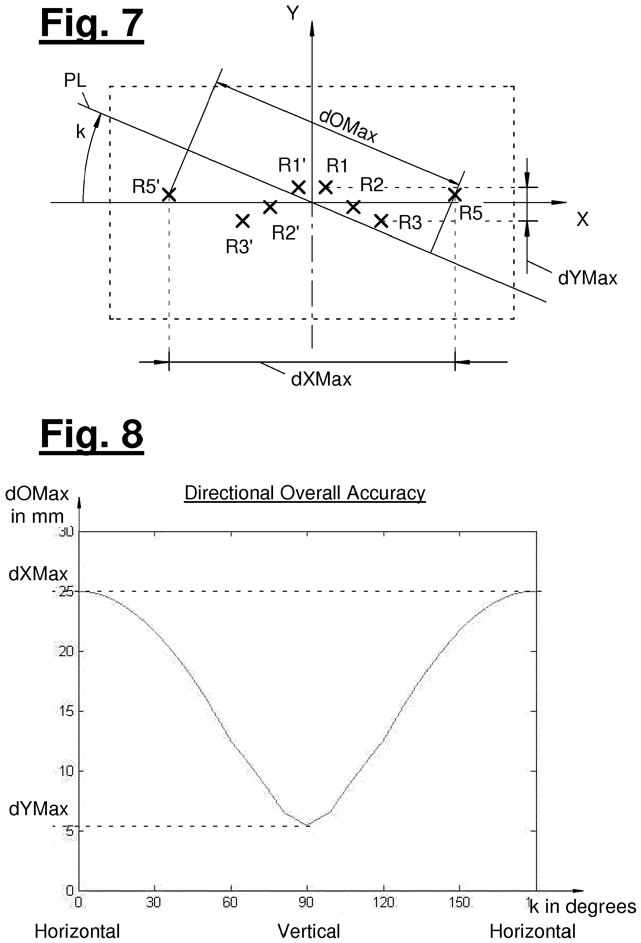

The radar patch antenna (10) according to the present disclosure is optimized to provide sufficient directional overall accuracy, a low directional ambiguity error and in particular a high number of unambiguously resolvable targets for various application modes, which will be explained below by taking reference to Figures 7 to 12. For the values depicted in Figures 8, 10 and 12 it is assumed that the planar radar antenna is adapted for the bandwidth of 76 to 77 GHz (Giga-Hertz). The wavelength to be considered is thus 3.945mm (Millimeter) to 3.893mm (Millimeter). The average values of 76.5 GHz (Giga-Hertz) Frequency and 3.919mm (Millimeter) or by simplification 3.9mm (Millimeter) may be used for defining the dimensions of the planar radar antenna.

In the exemplary embodiment of Figures 3, 8, 10 and 12, the uniform lateral spacing offsets (X1, X2) among the short-range receiving antenna elements (R1-R3, R1'-R3') have a length of 2.5mm (Millimeter), corresponding to 0.64 times the radar wavelength. The first longitudinal spacing offset (Y1) between short-range receiving antenna elements (R1 and R2 / R1' and R2') is -3.6mm, corresponding to 0.92 times the radar wavelength. The second longitudinal spacing offset (Y2) is -1.8mm (Millimeter), corresponding to 0.46 times the radar wavelength. The longitudinal spacing offset (Y3) of the long-range receiving antenna (R5) from the short-range detection core is 3.6mm (Millimeter), corresponding to 0.46 times the value of the radar wavelength. In absolute terms, the positions of the receiving antenna elements are (Average Wavelength WL assumed to be 3.9mm):

|  | R5' | R3' | R2' | R1' | R1 | R2 | R3 | R5 |
|---|---|---|---|---|---|---|---|---|
| X-Pos [mm] / [x*WL] | -12.5 / -3.20 WL | -6.25 / -1.6 WL | -3.75 / -0.96 WL | -1.25 / -0.32 WL | 1.25 / 0.32 WL | 3.75 / 0.96 WL | 6.25 / 1.6 WL | 12.5 / 3.2 WL |
| Y-Pos [mm] / [x*WL] | 0 / 0 WL | -3.6 / -0.92 WL | -1.8 / -0.46 WL | 1.8 / 0.46 WL | 1.8 / 0.46 WL | -1.8 / -0.46 WL | -3.6 / -0.92 WL | 0 / 0 WL |

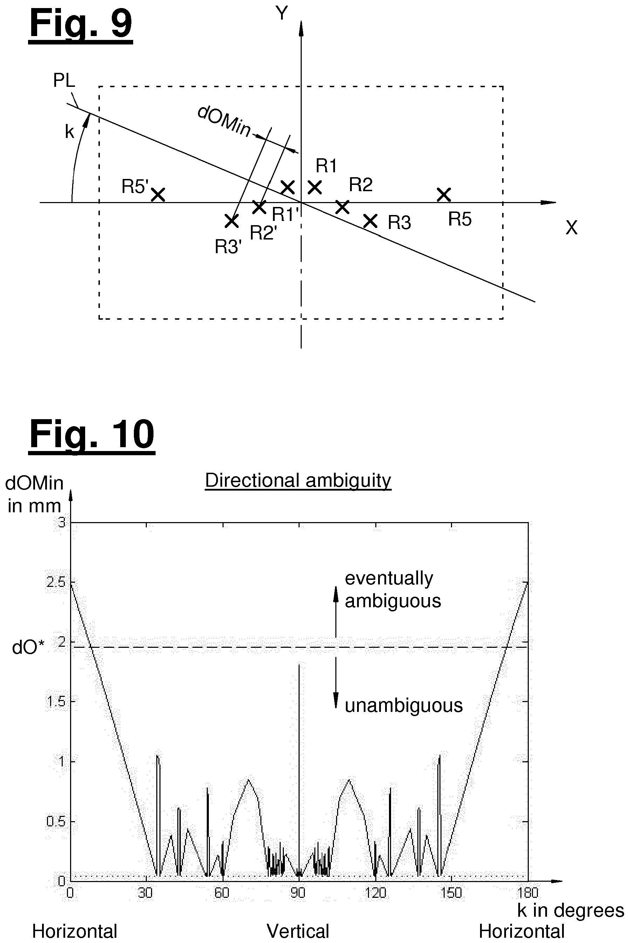

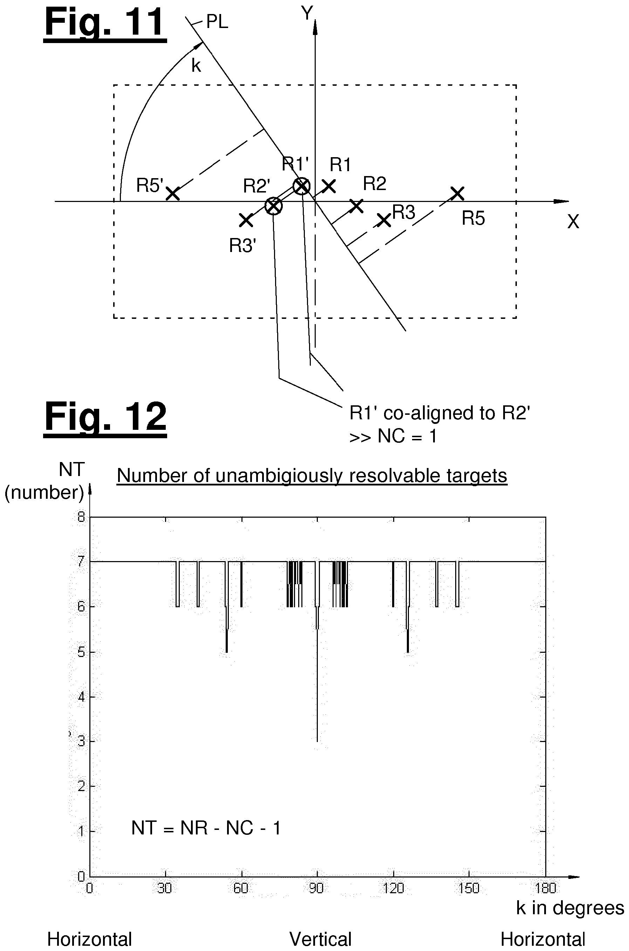

It is referred to Figures 7 and 8 to explain the directional overall accuracy of the radar patch antenna (10). Figure 7 (and likewise Figures 9 and 11) shows the distribution of phase centers (15) for all receiving antenna elements (R1-R5, R1'-R5') of the antenna (10) according to Figure 3. A projection line (PL) is drawn through the center of the radar patch antenna (10) and the projection line (PL) is rotated by the roll angle (k) starting from the horizontal orientation to a maximum of 180°. During this rotation, momentary distance values (dOMax) related to the direction of the projection line (PL) are taken and associated to the current value of the roll angle (k). The result is depicted in Figure 8 (and likewise in Figures 10 and 12).

The projection line (PL) is a representative line for an arrangement of one or multiple targets (T1, T2, T3), from which radar signals are impinging to the radar patch antenna. In Figure 6, such an arrangement of multiple targets and their related radar signals are depicted. The direction of the projection (from target to patch antenna) is essentially parallel to the normal direction (Z) .

In Figure 6 three separate targets (T1, T2, T3) from which radar signals could originate, are depicted in front of the radar patch antenna (10) / in front of the vehicle. These three targets (T1, T2, T3) create reflection signals which imping on the radar patch antenna in superposition. The targets (T1, T2, T3) are arranged on a line (PL'). A projection of this line (PL') with a projection direction parallel to the normal direction (Z) and onto the plane of the radar patch antenna (10) is depicted in Figure 6, resulting in the projection line (PL). I.e. the projection line (PL) is the result of a linear projection of the line (PL') onto the plane of the radar patch antenna (10).

Figure 6A shows a sectional view along the longitudinal direction (Y), i.e. according to arrow VI-A in Figure 6, onto two radar signal parts (dash-dot lines) from a common source (e.g. target T3 in Figure 6), which are impinging on neighboring phase centers (15, R1, R2) in the horizontal plane. Depending on the position of the common target, the radar signal parts will be received with a phase difference (also called phase shift) at the neighboring phase centers (15, R1, R2). This phase difference is caused by the difference in path lengths (b) from the source to the phase centers (15). The position of the common target is defined here by the angle (m) in Azimuth direction (compare Figure 6).

Unambiguous detection of the position of the common target is possible, if the path length difference (b) is equal to or smaller than half of the radar wavelength (Bragg criterion). The lateral spacing offset (X1) between the phase centers (15, R1, R2) is related to the maximum path length difference (b) which might occur between the radar signal parts impinging on neighboring antenna elements, depending on the position angle (m) in Azimuth direction of the common target. The relation between the path length difference (b), the position angle (m) and the lateral spacing offset (X1) is as follows:

(I) :

$$b = X1 * Cos(m).$$

To avoid ambiguities, not more than half of a radar wavelength may be included in the path length difference (b) which results in the following condition:

(II) :

$$b \leq 0.5 \; WL.$$

A combination of relations (I) and (II) results in the following design criterion for the lateral spacing offset (X1) to guarantee unambiguous detection within the specified field of view segment ranging from m_Min to 180° degrees - m_Min in Azimuth direction, wherein (m_Min) denotes the border angle of the field of view segment:

(III) :

$$X1 \leq 0.5 \; WL \; / \; Cos(m\_Min).$$

The (minimum or uniform) lateral spacing offset (X1) between neighboring short-range receiving antennas may thus be chosen in such a way that unambiguous detection is achieved for all possible position angles (m) within a 180° field of view (m_Min = 0 degrees -> cos(m_Min) = 1). This will be achieved by a lateral spacing offset (X1) which is equal to or smaller than half of the radar wavelength, which is a preferred parameter setting for the present disclosure.

However, if the field of view segment in which unambiguous detection is intended, in particular the horizontal field of view segment, is restricted to a specific angle range, e.g. from m_Min = 30° degree azimuth to 180° - m_Min = 150° azimuth, the lateral spacing offset (X1) may be increased to 0.58 times the radar wavelength or respectively 2.25mm (Millimeters), which is another preferred parameter setting for the present disclosure.

In general, when the field of view segment is defined as an angle segment ranging from m_Min degrees to 180 degrees - m_Min (e.g. Azimuth field of view := [m_Min ; 180° - m_Min]), the lateral spacing offset (X1) to be chosen for unambiguous position detection may be calculated according to above cited relation (IV).

This relation (IV), which was described above for the lateral spacing offset (X1) for illustration purposes, can be transferred analogously to the (minimum) longitudinal spacing offset (Y1, Y2, Y3) between receiving antenna elements (regardless of whether they are longitudinal spacing offsets between neighboring receiving antenna elements or not-neighboring receiving antenna elements). When at least one longitudinal spacing offset (Y2) is selected such that it is equal to or smaller than half of the radar wavelength, unambiguous position detection in the elevation direction is possible. In the example of Figure 3 the second longitudinal spacing offset (Y2) of 1.8mm (Millimeters) fulfills this criterion as it corresponds to about 0.48 times the radar wavelength.

In the preferred embodiment according to Figure 3, the azimuth field of view segment, in which unambiguous detection is intended, is restricted to an angular range from around 40-45 degrees to around 135-140 degrees Azimuth (i.e. m_Min has a value between 40 degrees and 45 degrees). As a result, the (minimum / uniform) lateral spacing offset (X1, X2) is set to 2.5mm, which corresponds to about 0.64 times the radar wavelength.

The directional overall possibility for resolving the position of any of these targets and the directional ambiguity will differ depending on the roll-angle (k) by which the respective radar signal / signals is / are impinging to the phase centers.

It is now related to Figures 7 and 8. The directional overall accuracy mainly depends on the (directional) maximum offset between the outermost phase centers of the receiving antenna elements (R1-R5, R1'-R5'), parallel to the projection line (PL). This maximum offset (dOMax) is indicated in Figure 7 for an angle of about 23° against the horizontal line (lateral direction X). Figure 8 shows how this directional overall accuracy will change depending on the roll-angle (k) and thus how the directional overall accuracy is distributed for the various values of the roll-angle (k). The maximum offset in lateral direction (dXMax) and in longitudinal direction (dYMax) are depicted in Figures 7 and 8 for the roll-angles of 0 degree and 90 degrees.

It will easily be understood that for objects which are situated more on a horizontal line, i.e. for roll-angles (k) from 0° to 30° or 150° to 180°, a high azimuth accuracy can be achieved, as the maximum directional offset for these roll-angles (k) is comparatively large. As a result various objects which are arranged around the own vehicle in such essentially horizontal positions like preceding vehicles, front vehicles or vehicles in neighboring lanes etc. can be detected with a very high overall position accuracy. It will be understood that those objects have the highest importance for automotive purposes, in particular for driver assistance systems, as the own vehicle will usually have the highest probability to collide with any of those objects. So increased accuracy in position detection for horizontal directions will also increase the possibilities to avoid such collisions and thus increase safety.

For values of the roll-angle between 60° and 120° a rather small maximum offset (dOMax) will be achieved which results in comparatively lower position detection accuracy. However, for automotive appliances it will be understood that objects occurring in these (almost vertical) directions will usually be above or below the own vehicle as static objects or foreign objects directly in front of the own vehicle. In both cases the overall position detection accuracy in these directions is of less importance.

The side by side arrangement of various antenna elements in the lateral direction (X) thus optimizes the directional overall accuracy for automotive radar purposes.

It is now related to Figures 9 and 10. Figure 9 shows the phase centers (15) of receiving antenna elements (R1-R5, R1'-R5') and the projection line (PL) with the roll-angle (k) in correspondence to Figure 7. Here, the minimum relevant offset (dOMin) is indicated. The minimum relevant offset (dOMin) indicates the minimum offset between neighboring phase centers in the direction of the projection line (PL). As the phase centers (15) are nonlinearly arranged, the position of this minimum offset may change from one set of neighboring receiving antenna elements (R2', R3') to another, depending on the value of the roll-angle (k).

The smaller this minimum relevant offset (dOMin) is, the larger the unambiguous angular region will be for this roll-angle (k), analogously to what has been explained above for the Azimuth field of view. The solid line in Figure 10 shows the value of the minimum offset (dOMin) depending on the roll-angle (k), i.e. the minimum offset (dOMin) between neighboring phase centers being closest to each other in the direction of the roll angle (k).

A dotted line in Figure 10 shows a threshold of for example 1 % of the radar wavelength. When the minimum offset (dOMin) is smaller than this threshold, the directional offset between the phase centers may be too small to differentiate any phase shifts between impinging radar signal parts and thus this offset may not be useable effectively for position detection or disambiguation of targets. Therefore the minimum relevant offset (dOMin) will take into account the next larger offset between neighboring phase centers (15), which is equal to or higher than the aforementioned threshold.

The dashed line in Figure 10 indicates a threshold offset value (dO*) for a specific resolution angle. This threshold (dO*) may in particular correspond to half of the radar wavelength, so that unambiguous position detection will be achieved.

As has been explained above, in the example of Figures 9 and 10, the (uniform) lateral spacing offsets (X1, X2) between neighboring short-range antenna elements (R1 - R3, R1' - R3') within the short-range detection core is set to about 2.5 Millimeters, i.e. about 0.64 times the radar wavelength. The Azimuth field of view / Horizontal field of view, in which unambiguous position detection is intended and possible, is thus delimited to a segment of about 40-45 degrees to 135-140 degrees Azimuth angle.

It is apparent from Figure 10 that due to the non-linear arrangement of the phase centers for almost every value of the roll angle (k) there will be at least one pair of neighboring phase centers of the receiving antenna element (10), whose offset width in the direction of the projection line (PL) will be smaller than the threshold offset (dO*) and on the other hand larger than the minimum offset (dotted line) which is required for effective disambiguation (The values of 0-10 degrees and 170-180 degrees are strongly suppressed by the transmitter antenna and thus do not cause disadvantages). As a result, unambiguous multi-target detection can be performed basically in all roll-angles (k) with the defined arrangement of receiving antenna elements (R1 - R5, R1' - R5') and their phase centers (15).

If the (uniform) lateral spacing offset (X1, X2) was chosen equal to or smaller than half of the radar wavelength, the offset width (dOMin) in the direction of the projection line (PL) would be lower than the threshold offset (dO*) for every roll-angle (k). However, with the given number of receiving antenna elements, also the maximum lateral offset (dXMax) would be smaller which would reduce the overall accuracy of position detection in Azimuth direction.

It will be understood that a limitation of the Azimuth field of view to a segment (m larger than 0 degrees) allows for an increased (uniform) lateral spacing offset (X1, X2) being larger than half of the radar wavelength and thus will increase the maximum offset (dOMax) which can be achieved with a given number of receiving antenna elements for various roll-angles (k). Increasing the maximum offset (dOMin) will increase the overall accuracy of position detection, as described above. It will be further be understood that the lateral spacing offsets (X1, X2, X3) and the longitudinal spacing offsets (Y1, Y2, Y3) may be changed depending on each other in an iterative optimization process to reach the optimal distribution of directional overall accuracy and directional ambiguity error.

It is now related to Figures 11 and 12. Figure 11 again corresponds to the depictions in Figures 7 and 9. Here, another direction of the projection line (PL) is drawn, which is associated to another value of the roll-angle (k) of about 55° against the horizontal line (lateral direction X).

Dashed lines in Figure 11 indicate perpendicular projections of each phase center (15) towards the projection line (PL). For the shown roll-angles (k), the dashed lines of the phase centers of receiving antenna elements (R1') and (R2') will fall together. With other words the phase centers of (R1') and (R2') are co-aligned normal to the roll-angle (k).

By such co-alignment the maximum number of unambiguously resolvable targets in the direction of the roll-angle (k) will be reduced as any radar signals which originate from various targets which are situated in this roll-angle (k) / on this projection line (PL) will have no phase difference when impinging on the co-aligned phase centers (R1', R2').

With other words, the more phase centers (R1', R2') are aligned normal to the direction of the roll-angle (k) / normal to the respective projection line (PL), the fewer targets can in principal be discerned in this roll-angle (k) .

As a rule, the number of resolvable targets (NT) in the roll-angle (k) can be calculated as the number of receiving antenna elements (NR) minus the number of phase centers co-aligned to another phase center (NC) normal to the direction (k) minus 1, i.e. according to the formula: NT = NR - NC - 1.

Figure 12 shows the number of resolvable targets (NT) depending on the roll-angle (k) for the radar patch antenna (10) according to Figure 3 or respectively the phase center arrangement according to Figure 11.

It will be understood, that, as a result of the non-linear arrangement pattern, for any roll-angle (k) a large number of targets can be discerned. In the present example only for the vertical direction (u=90°) the number of resolvable targets will be reduced to three, as due to the symmetric pattern, the respective conjugate phase centers (R1-R1', R2-R2'...) will be co-aligned. However, the probability that various important objects will occur in front of a vehicle in this vertical direction is very low. For any other direction (k) five, six or in most roll-angles (k) even seven individual targets can be discerned, as a sufficient number of phase centers, which will receive impinging radar signals and sufficient phase differences, will be present in any roll-angle (k).

Variations of the invention are possible in various ways.

Preferentially, the conductive patches (12, 12') of all antenna elements, in particular of all receiving antenna elements (R1-R5, R1'-R5') are arranged on a common substrate. Alternatively, a separate substrate may be used e.g. for each half (HR, HL) of the radar patch antenna (10) or respectively the receiving antenna field (11). A long-range receiving antenna element (R5, R5') is preferentially formed by a set of neighboring and electrically connected columns of patches (12), i.e. particular as a set of neighboring and electrically connected short-range receiving antenna elements.

The patches, patch columns and all electric connectivity lines may be permanently arranged on the substrate and the formation of electrically connected patches for forming a subset of patches may also be permanent. Alternatively the electric connection among patches for forming a subset and/or for forming an antenna element may be non-permanent. In particular a switching element may be provided for temporarily connecting various single patches to form a subset. Alternatively or additionally a switching element may be provided for temporarily connecting various permanent subsets to form an antenna element. For example, various patch columns may temporarily be used singularly as short-range receiving antenna elements. By interconnecting two or three or more patch columns, in particular neighboring patch columns, the very same patch columns may be used temporarily as one or several long-range receiving antenna element.

Alternatively or additionally within one patch column one or several patches at the end may be added or disconnected to the column for relatively changing the position of the phase center (15). By doing so for one or several receiving antenna elements the longitudinal aperture width (dY) may be changed and/or the longitudinal offset (Y1, Y2, Y3) may be varied. This may lead to various effects. On the one hand the directional characteristic in the elevation dimension can be changed: On the other hand, the distribution of the directional ambiguity area and/or of the directional number of unambiguously resolvable targets may be changed.

The afore-mentioned switching operations on the respective changes may be applied depending on a traffic situation or driving situation, in particular depending on the current or upcoming driving situation. For example, a first momentary switching status and the related arrangement of the phase centers may be used for driving in urban areas, where detection may be important for multi-target detection, e.g. pedestrian protection. A second momentary switching status and the related phase center arrangement may be defined for driving on motor ways and so on.

On the substrate (13) or respectively as a part of the radar patch antenna, additional conductive patches may be arranged outside of the antenna elements, in particular for attenuation of the surface waves caused by the above mentioned edge refraction phenomenon. Those additional patches may not or not permanently be used as antenna elements.

When short-range detection is sufficient for radar detection, a patch field (11) having at least three short-range receiving antenna elements in each half (HL, HR) (i.e. the short-range detection core) can be designed without any receiving antenna elements specifically designed (large aperture width (dX)) and/or arranged (large lateral spacing offset (X3)) for long range detection.

An antenna element structure according to the present disclosure can be embodied as a subset of patches (14) or in any other suitable way, for example by a slotted waveguide antenna, a flared notch antenna or a Vivaldi antenna.

LIST OF REFERENCES

| 10 | Planar Radar Antenna / Radar Patch Antenna |
|---|---|
| 11 | Antenna array arrangement / Patch field |
| 12, 12' | Conductive patch (square / rectangle shape) |
| 13 | Substrate |
| 14 | Antenna element structure / Subset of patches |
| 15 | Phase center |
| 16, 16' | Sensitivity lobe (long range / short range) |
| 17, 17' | Regular end |
| 18, 18' | Tapered end |
| A | Symmetry axis |
| b | Path length difference between radar signal parts impinging on neighboring phase centers |
| dX | Lateral aperture width |
| dY | Longitudinal aperture width |
| dOMax | Maximum offset between outermost phase centers parallel to PL |
| dOMin | Minimum relevant offset between neighboring phase centers parallel to PL |
| dO* | Threshold offset value for X degrees resolution angle |
| CL | straight connecting line |
| HL | Left half of receiving antenna elements |
| HR | Right half of receiving antenna elements |
| m | Position angle in Azimuth direction |
| m_Min | Border angle for defining a field of view segment from m_Min to 180° - m_Min |
| NC | Number of co-aligned phase centers normal to direction u |
| NR | Number of receiving antenna elements |
| NT | Number of resolvable targets in direction u |
| PL | Projection line |
| R1, R1' | First receiving antenna element (short range) |
| R2, R2' | Second receiving antenna element (short range) |
| R3, R3' | Third receiving antenna element (short range) |
| R4, R4' | Fourth receiving antenna element (short range) |
| R5, R5' | Fifth receiving antenna element (long range) |
| S1 | First sending antenna element |
| S2 | Second sending antenna element |
| T1 | First target (reflecting contour / object) |
| T2 | Second target (reflecting contour / object) |
| T3 | Third target (reflecting contour / object) |
| k | Roll-angle / Projection line angle |
| WL | Wavelength (not in drawing) |
| X | Lateral direction |
| X1 - X3 | Lateral spacing offset |
| Y | Longitudinal direction |
| Z | Normal direction |

**Claims**

1. Planar radar antenna for automotive appliances comprising an antenna array arrangement (11), wherein

   - the antenna array arrangement (11) comprises multiple neighboring receiving antenna elements (R1 - R5, R1' - R5'), each of them formed by an antenna element structure (14), and wherein
   - each receiving antenna element (R1 - R5, R1' - R5') has a phase center (15) indicating the effective center of a radar sensitivity lobe (16) of this antenna element, and wherein
   - the receiving antenna elements (R1 - R5, R1' - R5') in the antenna array arrangement (11) are arranged in an axially symmetric pattern comprising at least three receiving antenna elements (R1, R2, R3, R1', R2', R3') in each of both halves (HL, HR) of the antenna array arrangement (11), wherein
   - the antenna element structure (14) of each receiving antenna element (R1, R2, R3, R1', R2', R3') extends at least in a longitudinal direction (Y) essentially parallel to the symmetry axis (A),
   - **characterized in that** the phase centers (15) of the receiving antenna elements (R1, R2, R3, R1', R2', R3') are arranged in such a way, that no more than two phase centers (15) are situated on a straight connecting line (CL), which connects any two of the phase centers (15)

2. Planar radar antenna according to claim 1, wherein the minimum of three receiving antenna elements (R1, R2, R3 / R1', R2', R3') in each half (HR, HL)

   - consists of antenna elements having a small lateral aperture width, which is a maximum lateral aperture width (dX) which is equal to or smaller than half of the radar wavelength, for forming short-range receiving antenna elements; AND/OR
   - comprises antenna elements having an antenna element structure (14) which is formed by a subset of multiple electrically connected patches.

3. Planar radar antenna according to claim 2, wherein an additional receiving antenna element with small lateral aperture width is arranged on the symmetry axis (A), in particular in such a way that its phase center (15) is not placed on any straight connecting line (CL) through two phase centers (15) of the receiving antenna elements (R1 - R5, R1' - R5') in any of the halves (HR, HL).

4. Planar radar antenna according to claims 2 or 3, wherein at least two uniform lateral spacing offsets (X1, X2) essentially perpendicular to the symmetry axis (A) are provided between the at least three neighboring receiving antenna elements (R1-R4, R1'-R4') with small lateral aperture width (dX) within a half (HL, HR), wherein the uniform spacing offsets have the same value and, in particular wherein the amount of the uniform lateral spacing offsets (X1, X2) is equal to or smaller than half of the radar wavelength.

5. Planar radar antenna according to any of the preceding claims, wherein at least one receiving antenna element (R5 / R5') for long range detection is provided in lateral direction (X) next to the at least three neighboring receiving antenna elements (R1 - R4, R1' - R4') with small lateral aperture width (dX) and distanced to those by a lateral spacing offset (X3), which is equal to or larger than the radar wavelength, in particular larger than 1.25 times the value of the radar wavelength.

6. Planar radar antenna according to claim 5, wherein the at least one antenna element (R5 / R5') for long range detection has a large lateral aperture width (dX) which is equal to or larger than the radar wavelength, in particular larger than two times the value of the radar wavelength.

7. Planar radar antenna according to any of the preceding claims, wherein in every half (HR, HL) at least one positive longitudinal spacing offset (Y3) and one negative longitudinal spacing offset (Y1, Y2) with opposite direction to the positive longitudinal offset are provided between neighboring receiving antenna elements (R1 - R5), in particular wherein the length of at least one longitudinal spacing offset (Y2) is equal to or smaller than half of the radar wavelength.

8. Planar radar antenna according to any of the preceding claims, wherein non-uniform longitudinal spacing offsets (Y1, Y2, Y3) between neighboring receiving antenna elements (R1 - R5, R1' - R5') within a half (HR, HL) are provided, in particular wherein each longitudinal spacing offset (Y1, Y2, Y3) within a half (HR, HL) is unequal to zero.

9. Planar radar antenna according to any of the preceding claims, wherein the longitudinal aperture width (dY) of each receiving antenna element (R1 - R5, R1' - R5') is at least twice as long as the radar wavelength, in particular larger than three times the value of the radar wavelength.

10. Planar radar antenna according to any of the preceding claims, wherein an antenna element (R1 - R4, R1' - R4') with small lateral aperture width (dX) is formed by a straight column of patches (12) which in particular extends exclusively in the longitudinal direction (Y).

11. Planar radar antenna according to any of the preceding claims, wherein a receiving antenna element (R5, R5') with large lateral aperture width (dX) is formed by a set of neighboring and electrically connected columns of patches.

12. Planar radar antenna according to any of the preceding claims, wherein at least one separate sending antenna element (S1, S2) is arranged in lateral direction (X) next to the receiving antenna elements (R1 - R5, R1' - R5'), in particular on the same substrate (13).

13. Planar radar antenna according to any of the preceding claims, wherein additional conductive patches are arranged on a common substrate (13) with the antenna array arrangement (11) and outside of the antenna elements, in particular for attenuation of surface waves between the antenna elements (R1 - R5, R1' - R5', S1, S2) and the edges of the substrate.

14. Planar radar antenna according to any of the preceding claims, wherein the electric connection among patches (12) for forming an antenna element structure (14), in particular a patch-subset, and/or forming an antenna element (R1 - R5, R1' - R5', S1, S2) is non-permanent, in particular wherein a switching element is provided for temporally connecting various single patches (12) to form a subset and/or for temporally connecting various subsets (14) to form an antenna element.

15. Method for operating a planar radar antenna according to claim 14, wherein the electric connection among patches (12) is adapted depending on the driving situation of a vehicle.


**Patentansprüche**

1. Planare Radarantenne für Kraftfahrzeug-Anwendungen, die eine Gruppenantennenanordnung (11) umfasst, wobei:

   - die Gruppenantennenanordnung (11) mehrere benachbarte Empfangsantennenelemente (R1-R5, R1'-R5') umfasst, wovon jedes durch eine Antennenelementstruktur (14) gebildet ist, und wobei
   - jedes Empfangsantennenelement (R1-R5, R1'-R5') ein Phasenzentrum (15) aufweist, dass das effektive Zentrum einer Radarempfindlichkeitskeule (16) dieses Antennenelements anzeigt, und wobei
   - die Empfangsantennenelemente (R1-R5, R1'-R5') in der Gruppenantennenanordnung (11) in einem axialsymmetrischen Muster angeordnet sind, das mindestens drei Empfangsantennenelemente (R1, R2, R3, R1', R2', R3') in jeder der beiden Hälften (HL, HR) der Gruppenantennenanordnung (11) umfasst, wobei
   - sich die Antennenelementstruktur (14) jedes Empfangsantennenelements (R1, R2, R3, R1', R2', R3') zumindest in einer longitudinalen Richtung (Y) im Wesentlichen parallel zu der Symmetrieachse (A) erstreckt,
   - **dadurch gekennzeichnet, dass** die Phasenzentren (15) der Empfangsantennenelemente (R1, R2, R3, R1', R2', R3') derart angeordnet sind, dass sich nicht mehr als zwei Phasenzentren (15) auf einer geraden Verbindungslinie (CL) befinden, die zwei beliebige Phasenzentren (15) miteinander verbindet.

2. Planare Radarantenne nach Anspruch 1, wobei das Minimum von drei Empfangsantennenelementen (R1, R2, R3, R1', R2', R3') in jeder Hälfte (HR, HL)

   - aus Antennenelementen besteht, die eine kleine laterale Aperturbreite aufweisen, die einer maximalen laterale Aperturbreite (dX) entspricht, die kleiner oder gleich der Hälfte der Radarwellenlänge ist, um kurzreichweitige Empfangsantennenelemente zu bilden; und/oder
   - Antennenelemente umfasst, die eine Antennenelementstruktur (14) aufweisen, die aus einer Teilmenge von mehreren elektrisch verbundenen Patches gebildet ist.

3. Planare Radarantenne nach Anspruch 2, wobei ein zusätzliches Empfangsantennenelement mit kleiner lateraler Aperturbreite auf der Symmetrieachse (A) angeordnet ist, insbesondere derart, dass sein Phasenzentrum (15) nicht auf einer beliebigen geraden Verbindungslinie (CL) durch zwei Phasenzentren (15) der Empfangsantennenelemente (R1-R5, R1'-R5') in einer beliebigen der Hälften (HR, HL) platziert ist.

4. Planare Radarantenne nach Anspruch 2 oder 3, wobei mindestens zwei gleichmäßige seitliche Abstandsversätze (X1, X2) im Wesentlichen senkrecht zu der Symmetrieachse (A) zwischen den mindestens drei benachbarten Empfangsantennenelementen (R1-R4, R1'-R4') mit kleiner lateraler Aperturbreite (dX) innerhalb einer Hälfte (HL, HR) vorgesehen sind, wobei die gleichmäßigen seitlichen Abstandsversätze denselben Wert aufweisen und wobei insbesondere der Betrag der gleichmäßigen seitlichen Abstandsversätze (X1, X2) kleiner oder gleich der Hälfte der Radarwellenlänge ist.

5. Planare Radarantenne nach einem der vorhergehenden Ansprüche, wobei mindestens ein Empfangsantennenelement (R5/R5') für langreichweitige Detektion in lateraler Richtung (X) neben den mindestens drei benachbarten Empfangsantennenelementen (R1-R4, R1'-R4') mit kleiner lateraler Aperturbreite (dX) vorgesehen ist und zu diesen durch einen lateralen Abstandsversatz (X3) beabstandet ist, der größer oder gleich der Radarwellenlänge, insbesondere größer als das 1,25-Fache des Wertes der Radarwellenlänge, ist.

6. Planare Radarantenne nach Anspruch 5, wobei das mindestens eine Antennenelement (R5/R5') für langreichweitige Detektion eine große laterale Aperturbreite (dX) aufweist, die größer oder gleich der Radarwellenlänge, insbesondere größer als das Zweifache des Wertes der Radarwellenlänge, ist.

7. Planare Radarantenne nach einem der vorhergehenden Ansprüche, wobei in jeder Hälfte (HR, HL) mindestens ein positiver longitudinaler Abstandsversatz (Y3) und ein negativer longitudinaler Abstandsversatz (Y1, Y2) mit dem positiven longitudinalen Abstandsversatz entgegengesetzter Richtung zwischen benachbarten Empfangsantennenelementen (R1-R5) vorgesehen sind, wobei insbesondere die Länge des mindestens einen longitudinalen Abstandsversatzes (Y2) kleiner oder gleich der Hälfte der Radarwellenlänge ist.

8. Planare Radarantenne nach einem der vorhergehenden Ansprüche, wobei nicht gleichmäßige longitudinale Abstandsversätze (Y1, Y2, Y3) zwischen benachbarten Empfangsantennenelementen (R1-R5, R1'-R5') innerhalb einer Hälfte (HR, HL) vorgesehen sind, wobei insbesondere jeder longitudinale Abstandsversatz (Y1, Y2, Y3) innerhalb einer Hälfte (HR, HL) ungleich null ist.

9. Planare Radarantenne nach einem der vorhergehenden Ansprüche, wobei die longitudinale Aperturbreite (dY) jedes Empfangsantennenelements (R1-R5, R1'-R5') mindestens doppelt so lang wie die Radarwellenlänge, insbesondere größer als das Dreifache des Wertes der Radarwellenlänge, ist.

10. Planare Radarantenne nach einem der vorhergehenden Ansprüche, wobei ein Antennenelement (R1-R4, R1'-R4') mit kleiner lateraler Aperturbreite (dX) durch eine gerade Spalte von Patches (12) gebildet ist, die sich insbesondere ausschließlich in der longitudinalen Richtung (Y) erstreckt.

11. Planare Radarantenne nach einem der vorhergehenden Ansprüche, wobei ein Empfangsantennenelement (R5, R5') mit großer lateraler Aperturbreite (dX) durch eine Menge von benachbarten und elektrisch verbundenen Spalten von Patches gebildet ist.

12. Planare Radarantenne nach einem der vorhergehenden Ansprüche, wobei mindestens ein separates Sendeantennenelement (S1, S2) in lateraler Richtung (X) neben den Empfangsantennenelementen (R1-R5, R1'-R5'), insbesondere auf demselben Substrat (13), angeordnet ist.

13. Planare Radarantenne nach einem der vorhergehenden Ansprüche, wobei zusätzliche leitende Patches auf einem gemeinsamen Substrat (13) mit der Gruppenantennenanordnung (11) und außerhalb der Antennenelemente, insbesondere zur Abschwächung von Oberflächenwellen zwischen den Antennenelementen (R1-R5, R1'-R5', S1, S2) und den Kanten des Substrats, angeordnet sind.

14. Planare Radarantenne nach einem der vorhergehenden Ansprüche, wobei die elektrische Verbindung zwischen den Patches (12) zum Bilden einer Antennenelementstruktur (14), insbesondere einer Patch-Teilmenge, und/oder Bilden eines Antennenelements (R1-R5, R1'-R5', S1, S2) nicht permanent ist, wobei insbesondere ein Schaltelement zum zeitlichen Verbinden verschiedener einzelner Patches (12), um eine Teilmenge zu bilden, und/oder zum zeitlichen Verbinden von verschiedenen Teilmengen (14), um ein Antennenelement zu bilden, vorgesehen ist.

**15.** Verfahren zum Betreiben einer planaren Radarantenne nach Anspruch 14, wobei die elektrische Verbindung zwischen den Patches (12) in Abhängigkeit von der Fahrsituation eines Kraftfahrzeugs angepasst wird.

**Revendications**

**1.** Antenne radar plane pour appareils automobiles comprenant un agencement de réseau d'antenne (11), dans laquelle

- l'agencement de réseau d'antenne (11) comprend plusieurs éléments d'antenne de réception voisins (R1 - R5, R1' - R5'), chacun d'entre eux formé par une structure d'élément d'antenne (14), et dans laquelle
- chaque élément d'antenne de réception (R1 - R5, R1' - R5') a un centre de phase (15) indiquant le centre effectif d'un lobe de sensibilité de radar (16) de cet élément d'antenne, et dans laquelle
- les éléments d'antenne de réception (R1 - R5, R1' - R5') dans l'agencement de réseau d'antenne (11) sont agencés dans un schéma axialement symétrique comprenant au moins trois éléments d'antenne de réception (R1, R2, R3, R1', R2', R3') dans chacune des deux moitiés (HL, HR) de l'agencement de réseau d'antenne (11), dans laquelle
- la structure d'élément d'antenne (14) de chaque élément d'antenne de réception (R1, R2, R3, R1', R2', R3') s'étend au moins dans une direction longitudinale (Y) essentiellement parallèle à l'axe de symétrie (A),
- **caractérisée en ce que** les centres de phase (15) des éléments d'antenne de réception (R1, R2, R3, R1', R2', R3') sont agencés de telle manière que pas plus de deux centres de phase (15) sont situés sur une ligne de liaison droite (CL), qui relie deux des centres de phase (15).

**2.** Antenne radar plane selon la revendication 1, dans laquelle le minimum de trois éléments d'antenne de réception (R1, R2, R3 / R1', R2', R3') dans chaque moitié (HR, HL)

- se compose d'éléments d'antenne ayant une petite largeur d'ouverture latérale, qui est une largeur d'ouverture latérale maximale (dX) qui est égale ou inférieure à la moitié de la longueur d'onde du radar, pour former des éléments d'antenne de réception de courte portée ; ET/OU
- comprend des éléments d'antenne ayant une structure d'élément d'antenne (14) qui est formée par un sous-ensemble de plusieurs pastilles reliées électriquement.

**3.** Antenne radar plane selon la revendication 2, dans laquelle un élément d'antenne de réception supplémentaire avec une petite largeur d'ouverture latérale est agencé sur l'axe de symétrie (A), en particulier de telle manière que son centre de phase (15) n'est pas placé sur une ligne de liaison droite (CL) à travers deux centres de phase (15) des éléments d'antenne de réception (R1 - R5, R1' - R5') dans aucune des moitiés (HR, HL).

**4.** Antenne radar plane selon la revendication 2 ou 3 , dans laquelle au moins deux décalages d'espacement latéraux uniformes (X1, X2) sensiblement perpendiculaires à l'axe de symétrie (A) sont fournis entre les au moins trois éléments d'antenne de réception voisins (R1 - R4, R1' - R4') avec une petite largeur d'ouverture latérale (dX) au sein d'une moitié (HL, HR), dans laquelle les décalages d'espacement uniformes ont la même valeur et, en particulier dans laquelle la quantité des décalages d'espacement latéraux uniformes (X1, X2) est égale ou inférieure à la moitié de la longueur d'onde du radar.

**5.** Antenne radar plane selon l'une quelconque des revendications précédentes, dans laquelle au moins un élément d'antenne de réception (R5 / R5') pour une détection de longue portée est fourni dans la direction latérale (X) à côté des au moins trois éléments d'antenne de réception voisins (R1 - R4, R1' - R4') avec une petite largeur d'ouverture latérale (dX) et éloigné de ceux-ci d'un décalage d'espacement latéral (X3), qui est égal ou supérieur à la longueur d'onde du radar, en particulier supérieur à 1,25 fois la valeur de la longueur d'onde du radar.

**6.** Antenne radar plane selon la revendication 5, dans laquelle l'au moins un élément d'antenne (R5 / R5') pour une détection de longue portée a une grande largeur d'ouverture latérale (dX) qui est égale ou supérieure à la longueur d'onde du radar, en particulier supérieure à deux fois la valeur de la longueur d'onde du radar.

**7.** Antenne radar plane selon l'une quelconque des revendications précédentes, dans laquelle dans chaque moitié (HR, HL) au moins un décalage d'espacement longitudinal positif (Y3) et un décalage d'espacement longitudinal négatif (Y1, Y2) avec une direction opposée au décalage longitudinal positif sont fournis entre des éléments d'antenne de réception voisins (R1 - R5), en particulier dans laquelle la longueur d'au moins un décalage d'espacement longitudinal (Y2) est égale ou inférieure à la moitié de la longueur d'onde du radar.

**8.** Antenne radar plane selon l'une quelconque des revendications précédentes, dans laquelle des décalages d'espacement longitudinaux non uniformes (Y1, Y2, Y3) entre des éléments d'antenne de réception voisins (R1 - R5, R1' - R5') au sein d'une moitié (HR, HL) sont fournis, en particulier dans laquelle chaque décalage d'espacement longitudinal (Y1, Y2, Y3) au sein d'une moitié (HR, HL) est différent de zéro.

**9.** Antenne radar plane selon l'une quelconque des revendications précédentes, dans laquelle la largeur d'ouverture longitudinale (dY) de chaque élément d'antenne de réception (R1 - R5, R1' - R5') est au moins deux fois aussi longue que la longueur d'onde du radar, en particulier supérieure à trois fois la valeur de la longueur d'onde du radar.

**10.** Antenne radar plane selon l'une quelconque des revendications précédentes, dans laquelle un élément d'antenne (R1 - R4, R1' - R4') avec une petite largeur d'ouverture latérale (dX) est formé par une colonne droite de pastilles (12) qui en particulier s'étend exclusivement dans la direction longitudinale (Y).

**11.** Antenne radar plane selon l'une quelconque des revendications précédentes, dans laquelle un élément d'antenne de réception (R5, R5') avec une grande largeur d'ouverture latérale (dX) est formé par un ensemble de colonnes de pastilles voisines et reliées électriquement.

**12.** Antenne radar plane selon l'une quelconque des revendications précédentes, dans laquelle au moins un élément d'antenne d'envoi séparé (S1, S2) est agencé dans la direction latérale (X) à côté des éléments d'antenne de réception (R1 - R5, R1' - R5'), en particulier sur le même substrat (13).

**13.** Antenne radar plane selon l'une quelconque des revendications précédentes, dans laquelle des pastilles conductrices supplémentaires sont agencées sur un substrat commun (13) avec l'agencement de réseau d'antenne (11) et à l'extérieur des éléments d'antenne, en particulier pour l'atténuation d'ondes de surface entre les éléments d'antenne (R1 - R5, R1' - R5', S1, S2) et les bords du substrat.

**14.** Antenne radar plane selon l'une quelconque des revendications précédentes, dans laquelle la liaison électrique entre les pastilles (12) pour former une structure d'élément d'antenne (14), en particulier un sous-ensemble de pastille, et/ou former un élément d'antenne (R1 - R5, R1' - R5' , S1, S2) est non permanente, en particulier dans laquelle un élément de commutation est fourni pour relier temporairement différentes pastilles uniques (12) pour former un sous-ensemble et/ou pour relier temporairement différents sous-ensembles (14) pour former un élément d'antenne.

**15.** Procédé de fonctionnement d'une antenne radar plane selon la revendication 14, dans lequel la liaison électrique entre les pastilles (12) est adaptée en fonction de la situation de conduite d'un véhicule.

## Fig. 1

## Fig. 2

## Fig. 3

## Fig. 4

X1 = X2
Y1 ≠ Y2 ≠ Y3

# Fig. 5A  Fig. 5B  Fig. 5C  Fig. 5D

# Fig. 6

# Fig. 6A

# Fig. 7

# Fig. 8

Directional Overall Accuracy

## Fig. 9

## Fig. 10

Directional ambiguity

## Fig. 11

R1' co-aligned to R2'
>> NC = 1

## Fig. 12

NT
(number)

Number of unambigiously resolvable targets

NT = NR - NC - 1

k in degrees

Horizontal                    Vertical                    Horizontal

**EP 3 199 976 B1**

**Patent documents cited in the description**

- WO 2013053467 A1

- US 20150042507 A1